# EUROPEAN PATENT SPECIFICATION

(11) **EP 3 825 617 B1**
(45) Date of publication and mention of the grant of the patent: **12.03.2025**
(21) Application number: 18926889.9
(22) Date of filing: 19.07.2018
(51) Int. Cl.: H02M 1/36, H02M 1/00, H02M 3/00, H02M 7/06, H02M 7/12, H02M 5/44, F24F 11/88, F24F 11/46, H02H 9/02

(54) **AIR CONDITIONER**
KLIMAANLAGE
CLIMATISEUR

(43) Date of publication of application: 26.05.2021
(73) Proprietor: Carrier Japan Corporation, Tokyo 141-0032 (JP)
(72) Inventor: OGAWA, Kei, Fuji-shi, Shizuoka 416-8521 (JP); KANAMORI, Masaki, Fuji-shi, Shizuoka 416-8521 (JP); NUKUSHINA, Harunobu, Fuji-shi, Shizuoka 416-8521 (JP); ISHIDA, Keiichi, Fuji-shi, Shizuoka 416-8521 (JP)
(74) Representative: Gramm, Lins & Partner Patent- und Rechtsanwälte PartGmbB
(86) International application number: PCT/JP2018/027171
(87) International publication number: WO 2020/017005

(56) References cited:
- EP-A1- 3 021 052
- EP-A1- 3 208 551
- JP-A- 2011 069 538
- JP-A- 2012 117 704
- JP-A- 2017 208 979
- JP-A- 2018 105 557
- JP-A- S62 244 280

## Description

### Technical Field

Embodiments described herein relate generally to an air conditioning apparatus as disclosed in EP 3 021 052 A1 including an outdoor unit and an indoor unit and a signal interconnecting the outdoor unit and the indoor unit for data transmission.

### Background Art

The outdoor unit of the air conditioning apparatus includes a converter which converts a voltage of an AC power supply to a DC voltage, a capacitor connected to an output end of the converter, an inverter which converts a voltage of the capacitor to an AC voltage for load drive, and the like.

In this outdoor unit, in order to prevent a problem that a high inrush current flows to the converter and the capacitor when the AC power supply is turned on, an inrush current prevention element, for example, a positive temperature coefficient thermistor is inserted between the AC power supply and the converter. In addition, if current continues flowing to the positive temperature coefficient thermistor, a temperature increase and a resistance increase in accordance therewith of the positive temperature coefficient thermistor continue, and unnecessary power consumption is caused, and an input current to the converter is reduced and the inverter cannot be driven. Therefore, a normally open make and break device is connected in parallel with the positive temperature coefficient thermistor, and the make and break device is closed after a predetermined time elapses from the turning on of the power supply.

### Citation List

### Patent Literature

Patent Literature 1: JP 3019844 B

EP 3 021 052 A1 discloses an air conditioning apparatus comprising an outdoor unit and an indoor unit and a signal line interconnecting the outdoor unit and the indoor unit. The outdoor unit includes: a converter configured to convert a voltage of an AC power supply to a DC voltage; a capacitor connected to an output end of the converter; an inrush current prevention element inserted in a power supply line between the AC power supply and the converter; a switch configured to form a series circuit together with the inrush current prevention element by being inserted in the power supply line; a normally open make and break device connected in parallel to the series circuit of the inrush current prevention element and the switch; and an outdoor controller configured to close the make and break device, and open the make and break device when operation of the outdoor unit is unnecessary. The capacitor is configured to supply a voltage to the outdoor controller. The indoor unit includes an indoor controller configured to successively transmit a signal to the signal line when operation of the outdoor unit is necessary. Prior art comprising similar subject-matter can be found in JP 2012 117704 A and EP 3 208 551 A1.

### Summary of Invention

### Technical Problem

After the power supply is turned on, even in a state where operation of the outdoor unit is unnecessary, conduction to internal devices of the outdoor unit continues through the make and break device in a closed state, and even though operation is stopped, power is still consumed. The power consumed while operation is stopped, that is, so-called standby power is an issue to be improved in terms of energy saving.

Embodiments described herein aim to provide an air conditioning apparatus which can reduce standby power.

### Solution to Problem

The invention is defined by independent apparatus claim 1. Preferred embodiments are described by the dependent claims.

### Brief Description of Drawings

FIG. 1 is a block diagram showing a configuration of the first embodiment.
FIG. 2 is a flowchart showing control of an indoor controller of each embodiment.
FIG. 3 is a time chart showing operation of each part of an outdoor unit in the first embodiment.
FIG. 4 is a flowchart showing control of an outdoor controller of each embodiment.
FIG. 5 is a block diagram showing a configuration of a main part of the second embodiment.

### Mode for Carrying Out the Invention

[1] The first embodiment will be described hereinafter with reference to the accompanying drawings.

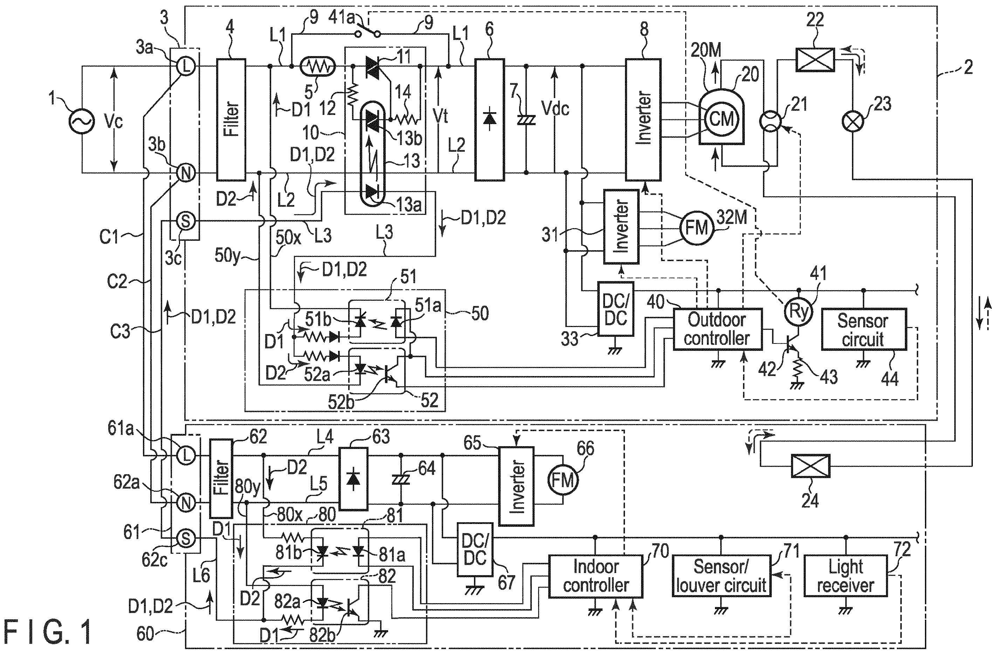

As shown in FIG. 1, an air conditioning apparatus is composed of an outdoor unit 2 installed outside and an indoor unit 60 installed inside.

Power supply terminals 3a and 3b of an external connection terminal 3 in the outdoor unit 2 are connected to an AC power supply 1, and power supply terminals 61a and 61b of an external connection terminal 61 in the indoor unit 60 are connected to the power supply terminals 3a and 3b via power supply cables C1 and C2. Then, a communication terminal 3c of the external connection terminal 3 and a communication terminal 61c of the external connection terminal 61 are interconnected via a serial signal line for data transmission (signal line) C3. Note that the power supply terminals 61a and 61b of the external connection terminal 61 in the indoor unit 60 may be directly connected to the AC power supply 1 to which the outdoor unit 2 is connected without passing through the power supply terminals 3a and 3b of the external connection terminal 3 in the outdoor unit 2. However, in that case, the serial signal line C3 connected between the communication terminals 3c and 61c and AC power supply lines from the power supply terminals 61a and 61b to the AC power supply 1 cross each other, and therefore caution should be used not to arrange them incorrectly.

### [Configuration of Outdoor Unit 2]

Power supply lines L1 and L2 are drawn from the power supply terminals 3a and 3b of the external connection terminal 3, and a converter (first converter) 6 is connected to the power supply lines L1 and L2 via a noise filter 4. The converter 6 is, for example, a diode bridge rectifier circuit, and converts a voltage Vc of the AC power supply 1 into a DC voltage. A smoothing capacitor (first capacitor) 7 is connected to an output end of the converter 6, and inverters 8 and 31 and a DC/DC converter 33 which is a DC power supply (first DC power supply) are connected between both ends of the smoothing capacitor 7.

The inverter 8 converts a voltage Vdc of the smoothing capacitor 7 into a three-phase AC voltage having a predetermined frequency for load drive. A drive motor (compressor motor) 20M of a compressor 20 is connected to an output end of the inverter 8. The compressor 20 draws in a gas refrigerant from its suction port, compresses the gas refrigerant, and discharges the compressed refrigerant from its discharge port. One end of an outdoor heat exchanger 22 is pipe-connected to the discharge port of the compressor 20 via a four-way valve 21. Then, one end of an indoor heat exchanger 24 in the indoor unit 60 is pipe-connected to the other end of the outdoor heat exchanger 22 via an expansion valve 23 which is a reducing unit, and the other end of the indoor heat exchanger 24 is pipe-connected to the suction port of the compressor 20 via the above-described four-way valve 21. A heat pump refrigeration cycle is composed by these connections with pipes. That is, during cooling, as shown by a solid arrow, the discharged refrigerant of the compressor 20 flows to the outdoor heat exchanger 22 through the four-way valve 21, the refrigerant passing through the outdoor heat exchanger 22 flows to the indoor heat exchanger 24 through the expansion valve 23, and the refrigerant passing through the indoor heat exchanger 24 is drawn into the compressor 20 through the four-way valve 21. The outdoor heat exchanger 22 functions as a condenser, and the indoor heat exchanger 24 functions as an evaporator. During heating, the flow path of the four-way valve 21 is switched, and as shown by a dashed arrow, the discharged refrigerant of the compressor 20 flows to the indoor heat exchanger 24 through the four-way valve 21, the refrigerant passing through the indoor heat exchanger 24 flows to the outdoor heat exchanger 22 through the expansion valve 23, and the refrigerant passing through the outdoor heat exchanger 22 is drawn into the compressor 20 through the four-way valve 21. The indoor heat exchanger 24 functions as a condenser, and the outdoor heat exchanger 22 functions as an evaporator.

The inverter 31 converts the voltage Vdc of the smoothing capacitor 7 into a three-phase AC voltage having a predetermined frequency for load drive. A drive motor (fan motor) 32M of an outdoor fan which sends outside air to the above-described outdoor heat exchanger 22 is connected to an output end of the inverter 31. The DC/DC converter (DC power supply) 33 converts the voltage Vdc of the smoothing capacitor 7 which is a DC voltage of about 280 V into a low DC voltage of 5 V or 12 V for a control component necessary for operation of the outdoor unit 2, and outputs it. The DC/DC converter 33 is a self-excited DC/DC converter circuit which starts oscillation and outputs a predetermined DC voltage not in accordance with a signal input from outside but when an input voltage exceeds a predetermined value Vdcs. A simple series converter can be used instead of the self-excited DC/DC converter circuit.

An outdoor controller 40 and a sensor circuit 44 are connected to an output end of the DC/DC converter 33, a relay 41 is connected between a collector and an emitter of a NPN transistor 42 and via a resistor 43, and a base of the NPN transistor 42 is connected to the outdoor controller 40. When the outdoor controller 40 turns on the NPN transistor 42, the relay 41 is energized by an output voltage of the DC/DC converter 33. The sensor circuit 44 includes various sensors such as a temperature sensor, a pressure sensor, a voltage sensor and a current sensor, a zero-crossing detection circuit, and the like, and notifies the outdoor controller 40 of the detection results of the various sensors and the zero-crossing detection circuit. The zero-crossing detection circuit detects a zero-crossing point of the power supply voltage Vc.

In the power supply line L1, an inrush current prevention element, for example, a positive temperature coefficient thermistor which is a self-heating resistance element (referred to also as a PTC thermistor) 5 is inserted between the noise filter 4 and the converter 6, and an insulating switch circuit 10 is connected between the positive temperature coefficient thermistor 5 and the converter 6. Note that, as the inrush current prevention element, a constant current element which only allows a constant current to flow can be used instead of the positive temperature coefficient thermistor 5.

The insulating switch circuit 10 includes a light-emitting element inserted in a serial signal line L3 drawn from the communication terminal 3c of the external connection terminal 3, for example, a photodiode 13a, a switch inserted at a position between the positive temperature coefficient thermistor 5 and the converter 6 in the power supply line L1 and forming a series circuit together with the positive temperature coefficient thermistor 5, for example, a bidirectional thyristor (triac) 11, and a bidirectional photothyristor (phototriac) 13b connected in parallel to both ends of the bidirectional thyristor 11 via resistors 12 and 14 and turned on in response to the light emission of the photodiode 13a, and triggers the bidirectional thyristor 11 by a voltage generated between the photothyristor 13b and the resistor 14.

The photodiode 13a and the bidirectional photothyristor 13b constitute a photocoupler 13. The photodiode 13a emits light when serial signals D1 and D2 which will be described later flow to the serial signal line L3, the bidirectional photothyristor 13b is turned on in accordance with the light emission, and the bidirectional thyristor 11 is turned on in accordance with the turning on of the bidirectional photothyristor 13b. Not only is a conduction path formed by turning on of the bidirectional photothyristor 13b, but also a conduction path is formed by turning on of the bidirectional thyristor 11. Therefore, a sufficient current capacity is secured in the power supply line L1. That is, since a sufficient current capacity cannot be secured in the power supply line L1 only by the bidirectional photothyristor 13b which is a common photothyristor element not having a high voltage rating, the bidirectional thyristor 11 is connected in parallel to the bidirectional photothyristor 13b, and a two-stage switch circuit in which the bidirectional thyristor 11 is triggered by an output of the bidirectional photothyristor 13b is formed in the insulating switch circuit 10. However, if a high voltage rated photothyristor element is used as the bidirectional photothyristor 13b, the second stage bidirectional thyristor 11 can be omitted.

A bypass line 9 is connected in parallel to a series circuit of the positive temperature coefficient thermistor 5 and the thyristor 11 in the power supply line L1, and a normally open make and break device, for example, a normally open relay contact 41a is inserted in the bypass line 9. The relay contact 41a is a normally open contact of the relay 41.

A serial communication circuit (first serial communication circuit) 50 is connected between the serial signal line L3 drawn from the communication terminal 3c and the power supply lines L1 and L2 via the above-described photodiode 13a. The serial communication circuit 50 includes a conduction path 50x from the serial signal line L3 to the power supply line L1, a transmitter 51 inserted in the conduction path 50x, a conduction path 50y from the serial signal line L3 to the power supply line L2, and a receiver 52 inserted in the conduction path 50y. The transmitter 51 is a photocoupler (photothyristor coupler) composed of a photodiode 51a connected to the outdoor controller 40 and a photothyristor 51b inserted in the conduction path 50x, and generates a serial signal (first serial signal) D1 synchronizing with a negative half-wave voltage of the AC power supply 1 in accordance with an instruction from the outdoor controller 40, and transmits the generated serial signal D1 to the indoor unit 60 through the serial signal line L3 and the serial signal line C3. The receiver 52 is a photocoupler (phototransistor coupler) composed of a photodiode 52a inserted in the conduction path 50y and a phototransistor 52b connected to the outdoor controller 40, and receives a serial signal (second serial signal) D2 synchronizing with a positive half-wave voltage of the AC power supply 1 and transmitted from the indoor unit 60, which will be described later, through the serial signal line C3 and the serial signal line L3.

The outdoor controller 40 is composed of a microcomputer and its peripheral circuits, and is operated by the output voltage of the DC/DC converter 33 based on the voltage of the smoothing capacitor 7, and executes the following first control, second control and third control.

In the first control, after a predetermined time from the start of operation by the output voltage of the DC/DC converter 33, the outdoor controller 40 turns on the NPN transistor 42 and energizes the relay 41, and thereby closes the relay contact 41a.

In the second control, in accordance with the start of operation by the output voltage of the DC/DC converter 33, the outdoor controller 40 executes serial communication (data transmission/reception) for control with the indoor unit 60 via the serial communication circuit 50, and controls the flow path of the four-way valve 21, switching of the inverters 8 and 31, and the like based on the content of the serial communication, the detection results of the various sensors in the sensor circuit 44, and the like.

In the third control, when operation of the outdoor unit 2 is unnecessary, for example, when an instruction to stop operation is received from the indoor unit 60 by the above-described serial communication for control, the outdoor controller 40 turns off the NPN transistor 42 and deenergizes the relay 41, and thereby opens the relay contact 41a. As a result, the output DC voltage Vdc of the capacitor 7 decreases, and eventually, operation of the DC/DC converter 33 stops and the outdoor controller 40 itself stops.

Since various electric components consuming power in the outdoor unit 2 are provided more downstream than the converter 6, when the relay 41 is deenergized, the power consumption of the outdoor unit 2 is reduced to 0, and the standby power of the air conditioning apparatus can be reduced.

### [Configuration of Indoor Unit 60]

Power supply lines L4 and L5 are drawn from the power supply terminals 61a and 61b of the external connection terminal 61, and a converter (second converter) 63 is connected to the power supply lines L4 and L5 via a noise filter 62. The converter 63 is, for example, a diode bridge rectifier circuit, and converts the voltage Vc of the AC power supply 1 into a DC voltage. A smoothing capacitor (second capacitor) 64 is connected to an output end of the converter 63, and an inverter 65 is connected to the smoothing capacitor 64. The inverter 65 converts a voltage of the smoothing capacitor 64 to an AC voltage having a predetermined frequency for driving a drive motor (fan motor) 66 of an indoor fan. Note that, since the indoor unit 60 has no electric component consuming a large amount of power, the small capacity smoothing capacitor 64 is used. Since the capacity of the smoothing capacitor 64 is small, an inrush current prevention configuration such as the positive temperature coefficient thermistor 5 is not provided in the indoor unit 60.

A DC/DC converter 67 which is a DC power supply (second DC power supply) is connected to the smoothing capacitor 64. The DC/DC converter 67 converts the voltage of the smoothing capacitor 64 into a DC voltage necessary for operation of the indoor unit 60, and outputs it. An indoor controller 70, a sensor/louver circuit 71 and a light receiver 72 are connected to an output end of the DC/DC converter 67. In addition, the inverter 65 is connected to the indoor controller 70, and the indoor controller 70 changes the rotation speed of the indoor fan by instructing the output frequency of the inverter 65. The sensor/louver circuit 71 includes various sensors such as a temperature sensor, a motion sensor and a current sensor, a zero-crossing detection circuit, a louver motor for wind direction adjustment, and the like, and notifies the indoor controller 70 of the detection results of the various sensors and the zero-crossing detection circuit, and drives the louver motor in accordance with an instruction from the indoor controller 70. The light receiver 72 receives an infrared light signal for operation transmitted from a remote control operator, and supplies the received light signal to the indoor controller 70.

A serial signal line L6 is drawn from the communication terminal 61c of the external connection terminal 61, and a serial communication circuit (second serial communication circuit) 80 is connected between the serial signal line L6 and the power supply lines L4 and L5. The serial communication circuit 80 includes a conduction path 80x from the power supply line L4 to the serial signal line L6, a transmitter 81 inserted in the conduction path 80x, a conduction path 80y from the power supply line L5 to the serial signal line L6, and a receiver 82 inserted in the conduction path 80y. The transmitter 81 is a photocoupler (photothyristor coupler) composed of a photodiode 81a connected to the indoor controller 70 and a photothyristor 81b inserted in the conduction path 80x, and generates the serial signal (second serial signal) D2 synchronizing with the positive half-wave voltage of the AC power supply 1 in accordance with an instruction from the indoor controller 70, and transmits the generated serial signal D2 to the outdoor unit 2 through the serial signal line L6 and the serial signal line C3. The receiver 82 is a photocoupler (phototransistor coupler) composed of a photodiode 82a inserted in the conduction path 80y and a phototransistor 82b connected to the indoor controller 70, and receives the serial signal D1 synchronizing with the negative half-wave voltage of the AC power supply 1 and transmitted from the outdoor unit 2 through the serial signal line C3 and the serial signal line L6.

The indoor controller 70 is composed of a microcomputer programmed in the same manner as the indoor controller 40 and its peripheral circuits, and is operated by an output voltage of the DC/DC converter 67 based on the voltage of the smoothing capacitor 64, and executes the following eleventh control, twelfth control and thirteenth control.

In the eleventh control, when operation of the outdoor unit 2 is necessary, for example, when the light receiver 72 receives infrared light indicating an operation start instruction transmitted from the remote control operator, the indoor controller 70 successively transmits the serial signal D2 from the serial communication circuit 80.

In the twelfth control, after the above-described successive transmission of the serial signal D2, the indoor controller 70 executes serial communication (data transmission/reception) for control with the outdoor unit 2 via the serial communication circuit 80, and controls operation of the fan motor 65 (operation of the inverter 65), operation of the louver motor in the sensor/louver circuit 71, and the like based on the content of the serial communication, the light reception state of the light receiver 72, the detection results of the various sensors in the sensor/louver circuit 71, and the like.

In the thirteenth control, when operation of the air conditioning apparatus is unnecessary, for example, when the light receiver 72 receives an infrared light signal indicating an operation stop instruction transmitted from the remote control operator, the indoor controller 70 transmits the serial signal D2 instructing to stop operation from the serial communication circuit 80.

### [Control of Indoor Controller 70]

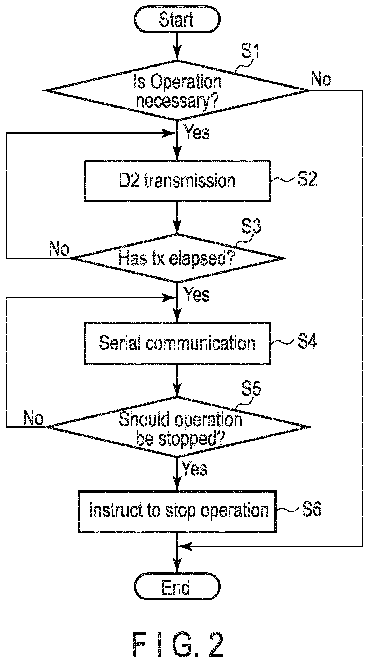

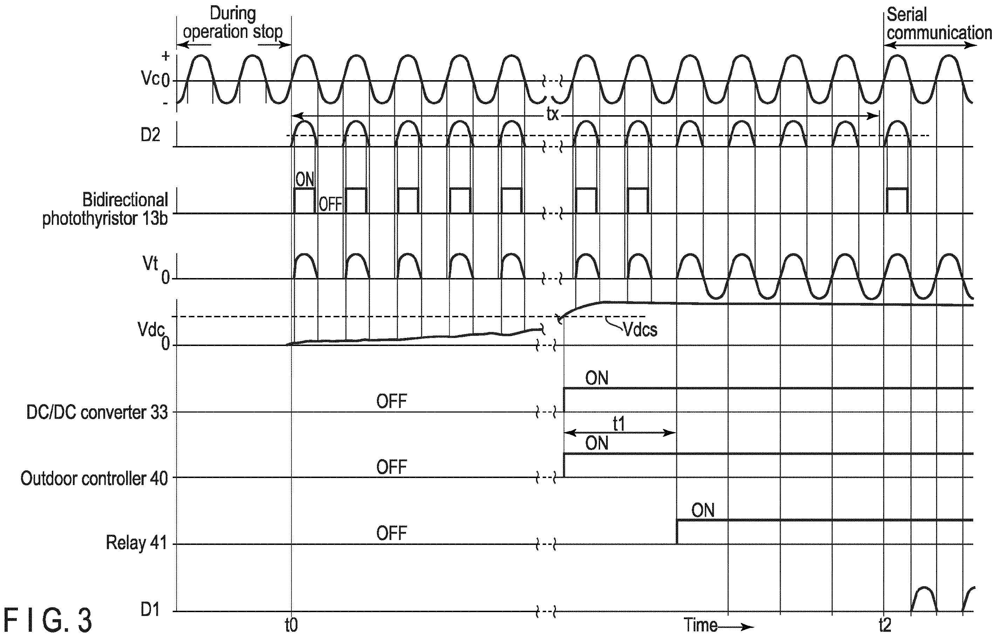

Control of the indoor controller 70 will be described with reference to the flowchart of FIG. 2 and the time chart of FIG. 3. Steps S1, S2, etc., in the flowchart will be hereinafter referred to simply as S1, S2, etc.

When the AC power supply 1 is turned on, the power supply voltage Vc is applied to the converter 63 via the power supply terminals 61a and 61b, the filter 62 and the power supply lines L4 and L5, and an output voltage of the converter 63 is applied to the smoothing capacitor 64. When the voltage of the smoothing capacitor 64 increases to greater than or equal to a predetermined value, the DC/DC converter 67 starts operation (is turned on), and the indoor controller 70 starts operation (is turned on) by the output voltage of the DC/DC converter 67.

The indoor controller 70 which has started operation determines whether operation of the outdoor unit 2 is necessary or not (S1). If the light receiver 72 does not receive the infrared light signal indicating the operation start instruction transmitted from the remote control operator, the indoor controller 70 determines that operation of the outdoor unit 2 is not necessary (NO in S1), and returns to S1 and continues monitoring.

If the light receiver 72 receives the infrared light signal indicating the operation start instruction, the indoor controller 70 determines that operation of the outdoor unit 2 is necessary (YES in S1), and as shown in FIG. 3, the indoor controller 70 successively transmits the serial signal D2 synchronizing with the positive half-wave voltage of the power supply voltage Vc from the serial communication circuit 80 (S2), and monitors elapse of a predetermined time Tx from the start of transmission (S3). Not until the predetermined time tx elapses (NO in S3), the indoor controller 70 returns to S2 and continues successive transmission of the serial signal D2 (S2). Here, each serial signal D2 means an "H" signal, that is, a signal that current flows in the serial signal line C3.

After the predetermined time tx elapses (YES in S3), the indoor controller 70 ends the successive transmission of the serial signal D2, and executes the serial communication (data transmission/reception) for control with the outdoor unit 2 via the serial communication circuit 80 (S4). In accordance with the execution, the indoor controller 70 monitors whether the light receiver 72 receives the infrared light indicating the operation stop instruction transmitted from the remote control operator or not (S5). If the light receiver 72 does not receive the infrared light signal indicating the operation stop instruction (NO in S5), the indoor controller 70 returns to S4 and continues the serial communication for control (S4). If the light receiver 72 receives the infrared light signal indicating the operation stop instruction (YES of S5), the indoor controller 70 instructs the outdoor unit 2 to stop operation by serial communication (S6). After that, the indoor controller 70 ends the serial communication, and returns to S1 and monitors whether operation of the outdoor unit 2 is necessary or not (S1).

### [Control of Outdoor Controller 40]

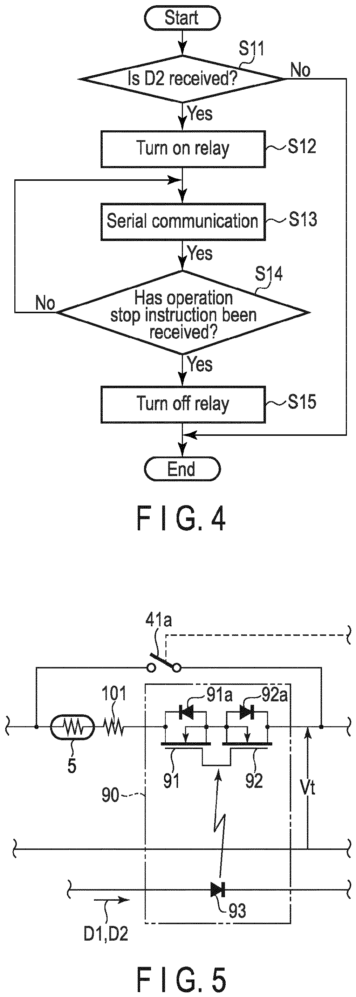

Control of the outdoor controller 40 will be described with reference to the time chart of FIG. 3 and the flowchart of FIG. 4.

When the AC power supply 1 is turned on, the power supply voltage Vc is applied to the power supply lines L1 and L2 via the power supply terminals 3a and 3b and the filter 4. At this time, since the relay contact 41a is open and both the bidirectional thyristor 11 and the bidirectional photothyristor 13b of the insulating switch circuit 10 are off, the power supply voltage Vc of the power supply lines L1 and L2 is not applied to the converter 6. No signal flows to the serial communication line until it is determined in the indoor unit 60 that operation of the outdoor unit 2 is necessary. When it is determined in the indoor unit 60 that operation of the outdoor unit 2 is necessary (a time t0 in FIG. 3), the serial signal D2 is successively transmitted from the serial communication circuit 80 of the indoor unit 60, and the receiver 52 of the serial communication circuit 50 receives each serial signal D2, and the received signal is supplied to the outdoor controller 40. Note that, since the outdoor controller 40 does not receive the voltage for operation from the DC/DC converter 33 at this time, the outdoor controller 40 is in an operation off state.

In the time chart shown in FIG. 3, in a period where the voltage of each serial signal D2 transmitted from the indoor unit 60 is greater than or equal to a predetermined value shown by a dashed line, the photodiode 13a of the photocoupler 13 emits light. When the photodiode 13a emits light, the bidirectional photothyristor 13b is turned on, and in accordance with the turning on, the bidirectional thyristor 11 is triggered and turned on. The bidirectional thyristor 11 which has been turned on is turned off with timing when the positive half-wave voltage of the power supply voltage Vc decreases to a zero level.

The power supply voltage Vc between the power supply lines L1 and L2 is applied to the converter 6 through the positive temperature coefficient thermistor 5 in a period where the bidirectional thyristor 11 is on. That is, the voltage Vt having a waveform rising in accordance with the turning on of the bidirectional thyristor 11 and falling in accordance with the turning off of the bidirectional thyristor 11 is applied to the converter 6.

In the present embodiment, since the serial signal D2 synchronizing with the positive half-wave voltage of the power supply voltage Vc is successively transmitted from the indoor unit 60 to the outdoor unit 2, the bidirectional photothyristor 13b is turned on by each serial signal D2, and the bidirectional thyristor 11 is triggered by the turning on of the bidirectional phyotohyristor 13b, both the bidirectional photothyristor 13b and the bidirectional thyristor 11 are only turned on in a positive level period of the power supply voltage Vc but are not turned on in a negative level period. If consideration is given to the point that the bidirectional photothyristor 13b and the bidirectional thyristor 11 are only turned on in the positive level period of the power supply voltage Vc, a thyristor and a photothyristor that current only flows in one direction may be used instead of the bidirectional photothyristor 13b and the bidirectional thyristor 11.

When the AC power supply 1 is turned on, if the AC voltage Vc is directly applied to the converter 6 at the same level, a high inrush current flows from the AC power supply 1 toward the converter 6 and the smoothing capacitor 7. However, when the AC power supply 1 is turned on, since the positive temperature coefficient thermistor 5 is interposed in the power supply line L between the AC power supply 1 and the converter 6, the voltage Vt lower than the power supply voltage Vc is applied to the converter 6. Consequently, a high inrush current does not flow from the AC power supply 1 toward the converter 6 and the smoothing capacitor 7.

The voltage Vt applied to the converter 6 is rectified in the converter 6 and is applied to the smoothing capacitor 7. Accordingly, the voltage Vdc of the smoothing capacitor 7 gradually increases.

When the voltage Vdc of the smoothing capacitor 7 increases to greater than or equal to the predetermined value Vdcs, the DC/DC converter 33 starts operation (is turned on) and outputs a predetermined DC voltage. The output voltage of the DC/DC converter 33 is applied to the outdoor controller 40 and the sensor circuit 44. Accordingly, the outdoor controller 40 and the sensor circuit 44 start operation (are turned on).

Note that, since the bidirectional photothyristor 13b is turned by the serial signal D2 synchronizing with the positive half-wave voltage of the power supply voltage Vc, and the bidirectional thyristor 11 is triggered by the turning on of the bidirectional thyristor 13b, the bidirectional thyristor 11 can be kept on over a long period corresponding to about half the cycle of the power supply voltage Vc. Since the on period of the bidirectional thyristor 11 can be made as long as possible, the voltage Vdc of the smoothing capacitor 7 can be increased earlier, and the operation of the DC/DC converter 33 and the outdoor controller 40 can be started earlier.

After a predetermined time t1 from the start of operation, the outdoor controller 40 which has started operation checks whether the received signal of the successive serial signal D2 is received from the receiver 52 of the serial communication circuit 50 or not (S11). If the received signal of the successive serial signal D2 is not received (NO in S11), the outdoor controller 40 returns to S11 and repeats checking of the received signal.

If the received signal of the successive serial signal D2 is received (YES in S11), the outdoor controller 40 determines that there is no danger of an inrush current at this time, and turns on the NPN transistor 42 and energizes (turns on) the relay 41 (S12), and thereby closes the relay contact 41a. When the relay contact 41a is closed, the bypass line 9 is brought into conduction, and the power supply voltage Vc of the power supply lines L1 and L2 is directly applied to the converter 6 at the same level.

If current continues flowing to the positive temperature coefficient thermistor 5, a temperature increase and a resistance increase in accordance therewith of the positive temperature coefficient thermistor 5 continue, and as a result, unnecessary power consumption is caused, and an input current to the converter 6 is reduced and the inverters 8 and 31 cannot be driven. For this reason, the bypass line 9 is brought into conduction, and the power supply voltage Vc is directly supplied to the converter **6.**

Note that, when the relay 41 is energized, voltage has the same potential at both ends of the insulating switch 10. Therefore, as shown in FIG. 3, even if the photodiode 13a emits light by generation of the subsequent serial signal D2, the bidirectional photothyristor 13b is kept off, and the bidirectional thyristor 11 is not turned on.

On the other hand, after the relay 41 is energized, at a time t2 in FIG. 3, the outdoor controller 40 executes serial communication (data transmission/reception) for control with the indoor unit 60 via the serial communication circuit 50 (S13), and controls the flow path of the four-way valve 21, the switching of the inverters 8 and 31, and the like based on the content of the serial communication, the detection results of the various sensors in the sensor circuit 44, and the like.

If an operation stop instruction is received from the indoor unit 60 by the serial communication for control (YES in S14), the outdoor controller 40 determines that operation of the outdoor unit 2 is unnecessary, and turns off the NPN transistor 42 and deenergizes (turns off) the relay 41 (S15), and thereby opens the relay contact 41a. When the relay contact 41a is opened, the bypass line 9 is cut off.

When the bypass line 9 is cut off, a series circuit of the positive temperature coefficient thermistor 5, and the resistor 12, the bidirectional photothyristor 13b and the resistor 14 of the insulating switch circuit 10 is put in the power supply line L1 between the AC power supply 1 and the converter 6. At this time, since the serial communication with the indoor unit 60 ends and the serial signal D2 is not received, the bidirectional thyristor 11 and the bidirectional photothyristor 13b are kept in an off state, and the power supply voltage Vc of the power supply lines L1 and L2 is not applied to the converter 6. After that, in accordance with power consumption in the outdoor controller 40 and the various sensor circuits, the voltage Vdc of the smoothing capacitor 7 gradually decreases and decreases to less than or equal to the predetermined value Vdcs after several tens of seconds, and the DC/DC converter 33 stops operation and power supply to the outdoor controller 40 stops, and the outdoor controller 40 ends operation.

As described above, in a standby state where operation of the outdoor unit 2 is unnecessary, even if the AC power supply 1 is on, conduction from the AC power supply 1 to the internal devices of the outdoor unit 2 is prohibited. Therefore, the standby power is not generated in the outdoor unit 2, and the energy-saving effect of the air conditioning apparatus is improved.

The second embodiment will be described with reference to the accompanying drawings.

As shown in FIG. 5, at a position between the positive temperature coefficient thermistor 5 and the converter 6 in the power supply line L1, an insulating switch circuit 90 is connected via a resistor 101 instead of the insulating switch circuit 10 of the first embodiment.

The insulating switch circuit 90 includes a switch inserted at a position between the resistor 101 and the converter 6 in the power supply line L1 and forming a series circuit together with the positive temperature coefficient thermistor 5 and the resistor 101, for example, a series circuit of a pair of MOSFETs 91 and 92, and a light-emitting element inserted in the serial signal line L3 drawn from the communication terminal 3c of the external connection terminal 3, for example, a photodiode 93. The MOSFETs 91 and 92 have parasitic diodes 91a and 91b, respectively, and respond to the light emission of the photodiode 93. That is, the photodiode 93 emits light when the serial signals D1 and D2 flow in the serial signal line L3, the MOSFETs 91 and 92 are turned on in a period where the photodiode 93 emits light. When the MOSFETs 91 and 92 are on, the positive half-wave voltage of the power supply voltage Vc is applied to the converter 6 through the main body of the MOSFET 91 and the parasitic diode 92a of the MOSFET 92, and the negative half-wave voltage of the power supply voltage Vc is applied to the converter 6 through the main body of the MOSFET 92 and the parasitic diode 91a of the MOSFET 91.

The other configuration, control and effect are the same as those of the first embodiment. Therefore, explanations of the configuration, control and effect are omitted.

### The modifications of the first and second embodiments

In the above-described embodiments, the serial signal D1 synchronizes with the negative half-wave voltage of the AC power supply 1, and the serial signal D2 synchronizes with the positive half-wave voltage of the AC power supply 1. However, the serial signal D1 may synchronize with the positive half-wave voltage of the AC power supply 1, and the serial signal D2 may synchronize with the negative half-wave voltage of the AC power supply 1. That is, the serial signal D1 only needs to be synchronized with the positive or negative half-wave voltage, and the serial signal D2 only needs to be synchronized with the half-wave voltage different from the half-wave voltage with which the serial signal D1 is synchronized. Furthermore, both the indoor controller 70 and the outdoor controller 40 may include a circuit which can transmit/receive a serial signal in both the positive and negative directions, and a signal may be transmitted/received in a time division manner between the indoor controller 70 and the outdoor controller 40.

In the above-described embodiments, the relay contact 41a is used as the make and break device inserted in the bypass line 9. However, another make and break device having the same function such as a semiconductor switch element may be used instead.

In the above-described embodiments, the case of using a diode bridge rectifier circuit as the converters 6 and 63 is described. However, a converter for harmonic reduction or a boost converter may be used instead.

### Reference Signs List

1···AC power supply, 2···Outdoor unit, 3···External connection terminal, 3a and 3b···Power supply terminals, 3c···Communication terminal, L1 and L2···Power supply lines, L3···Serial signal line (signal line), C1 and C2···Power supply cables, C3···Serial signal line, 5···Positive temperature coefficient thermistor (inrush current prevention element), 6···Converter, 7···Smoothing capacitor, 8···Inverter, 9···Bypass line, 10···Insulating switch circuit, 11···Triac, 13···Photocoupler, 13a···Photodiode, 13b···Phototriac, 20M···Compressor motor, 31···Inverter, 32M···Fan motor, 33···DC/DC converter (DC power supply), 40···Outdoor controller, 41···Relay, 41a···Relay contact (make and break device), 50···Serial communication circuit (first serial communication circuit), 51···Transmitter, 52···Receiver, 60···Indoor unit, 61, External connection terminal, 61a and 61b···Power supply terminals, 61c···Communication terminal, 65···Inverter, 67···DC/DC converter (DC power supply), 70···Indoor controller, 80···Serial communication circuit (second serial communication circuit), 81···Transmitter, and 82···Receiver.

## Claims

1. An air conditioning apparatus comprising an outdoor unit (2) and an indoor unit (60) and a signal line (C3) interconnecting the outdoor unit (2) and the indoor unit (60)
the outdoor unit (2) includes:
a converter (6) configured to convert a voltage of an AC power supply (1) to a DC voltage;
a capacitor (7) connected to an output end of the converter (6);
an inrush current prevention element (5) inserted in a power supply line (L1, L2) between the AC power supply (1) and the converter (6);
a switch (11, 13b) configured to form a series circuit together with the inrush current prevention element (5) by being inserted in the power supply line (L1, L2);
a normally open make and break device (41a) connected in parallel to the series circuit of the inrush current prevention element (5) and the switch; and
an outdoor controller (40) configured to close the make and break device (41a), and open the make and break device (41a) when operation of the outdoor unit (2) is unnecessary,
the capacitor (7) is configured to supply a voltage to the outdoor controller (40), and
the indoor unit (60) includes:
an indoor controller (70) configured to successively transmit a second serial signal (D2) to the signal line (C3) when operation of the outdoor unit (2) is necessary,
the outdoor unit (2) further includes:
a first serial communication circuit (50) configured to transmit a first serial signal (D1) to the indoor unit (60) through the serial signal line, and receive the second serial signal (D2) transmitted from the indoor unit (60) through the serial signal line,
the indoor unit (60) further includes:
a second serial communication circuit (80) configured to transmit the second serial signal (D2) to the first serial communication circuit (50) through the serial signal line, and receive the first serial signal (D1) through the serial signal line, and wherein the first serial communication circuit (50) and the second serial communication circuit (80) are configured to synchronise
the first serial signal (D1) and the second serial signal (D2), respectively, with a half-wave voltage of the AC power supply (1),
**characterized in that**
the outdoor controller (40) is configured to close the make and break device (41a) after a predetermined time from a start of operation,
the outdoor unit (2) includes a light-emitting element (13a),
the switch (11, 13b) is configured to respond to light emission of the light-emitting element (13a), and wherein
the indoor unit (60) is further configured to control the light-emitting element (13a) via the second serial signal (D2).

2. The air conditioning apparatus of claim 1, **characterized in that**
the light-emitting element is a photodiode (13a), and
the switch is a thyristor (11).

3. The air conditioning apparatus of claim 2, **characterized in that** the switch is an insulating switch circuit which includes the thyristor (11) and a photothyristor (13b) connected in parallel to the thyristor (11) and configured to be turned on in response to light emission of the photodiode (13a), and is configured to trigger the thyristor (11) in accordance with turning on of the photothyristor (13b).

4. The air conditioning apparatus of claim 1, **characterized in that**
the light-emitting element is a photodiode (11), and
the switch is a series circuit of a pair of MOSFETs (91, 92) configured to respond to light emission of the photodiode (11).

5. The air conditioning apparatus of claim 1, **characterized in that**
the first serial signal (D1) synchronizes with a positive or negative half-wave voltage of the AC power supply (1), and
the second serial signal (D2) synchronizes with a half-wave voltage different from the half-wave voltage with which the first serial signal (D1) synchronizes.

6. The air conditioning apparatus of claim 1, **characterized in that** the outdoor unit (2) further includes:
an inverter (8, 31) configured to convert the voltage of the capacitor (7) into an AC voltage for load drive; and
a DC power supply (33) which is connected to the capacitor (7), and configured to output a DC voltage necessary for operation of the outdoor unit (2) including operation of the outdoor controller (40) when the voltage of the capacitor (7) is greater than or equal to a predetermined value.

## Patentansprüche

1. Klimaanlage mit einer Außeneinheit (2) und einer Inneneinheit (60) und einer Signalleitung (C3), die die Außeneinheit (2) und die Inneneinheit (60) miteinander verbindet,
die Außeneinheit (2) umfasst:
einen Wandler (6) ausgebildet zum Umwandlung er eine Spannung einer Wechselstromversorgung (1) in eine Gleichspannung umzuwandeln;
einen Kondensator (7), der mit einem Ausgangsende des Wandlers (6) verbunden ist;
ein Einschaltstrom-Verhinderungselement (5), das in eine Stromversorgungsleitung (L1, L2) zwischen der Wechselstromversorgung (1) und dem Wandler (6) angeordnet ist;
einen Schalter (11, 13b), der so konfiguriert ist, dass er zusammen mit dem Einschaltstrom-Verhinderungselement (5) eine Reihenschaltung bildet, indem er in die Stromversorgungsleitung (L1, L2) eingefügt ist;
eine normalerweise offene Schließ- und Unterbrechungsvorrichtung (41a), die parallel zu der Reihenschaltung des Einschaltstrom-Verhinderungselements (5) und des Schalters geschaltet ist; und
eine Außensteuerung (40), die so konfiguriert ist, dass sie die Schließ- und Unterbrechungsvorrichtung (41a) schließt und die Schließ- und Unterbrechungsvorrichtung (41a) öffnet, wenn der Betrieb der Außeneinheit (2) nicht erforderlich ist,
der Kondensator (7) ausgebildet ist, eine Spannung an die Außensteuerung (40) zu liefern, und
die Inneneinheit (60) Folgendes umfasst:
eine Innensteuerung (70), die so konfiguriert ist, dass sie nacheinander ein zweites serielles Signal sendet, wenn ein Betrieb der Außeneinheit (2) erforderlich ist,
die Außeneinheit (2) ferner umfassend:
eine erste serielle Kommunikationsschaltung (50), die so konfiguriert ist, um ein erstes serielles Signal (D1) über die serielle Signalleitung an die Inneneinheit (60) zu senden und das zweite serielle Signal (D2) empfängt, das von der Inneneinheit (60) über die serielle Signalleitung gesendet wird,
die Inneneinheit (60) ferner umfassend:
eine zweite serielle Kommunikationsschaltung (80), die so konfiguriert ist, dass sie das zweite serielle Signal (D2) über die serielle Signalleitung an die erste serielle Kommunikationsschaltung (50) überträgt und das erste serielle Signal (D1) über die serielle Signalleitung empfängt, und wobei die erste serielle Kommunikationsschaltung (50) und die zweite serielle Kommunikationsschaltung (80) konfiguriert sind, das erste serielle Signal (D1) bzw. das zweite serielle Signal (D2) mit einer Halbwellenspannung der Wechselstromversorgung (1)synchronisieren,
**dadurch gekennzeichnet, dass**
die Außensteuerung (40) so konfiguriert ist, dass sie die Schließ- und Unterbrechungsvorrichtung (41a) nach einer vorgegebenen Zeit ab Betriebsbeginn schließt,
die Außeneinheit (2) ein lichtemittierendes Element (13a) umfasst,
der Schalter (11, 13b) so konfiguriert ist, dass er auf die Lichtemission des lichtemittierenden Elements (13a) reagiert, und wobei die Innenraumeinheit (60) ferner so konfiguriert ist, dass sie das lichtemittierende Element (13a) über das zweite serielle Signal (D2) steuert.

2. Klimaanlage nach Anspruch 1, **dadurch gekennzeichnet, dass**
das lichtemittierende Element eine Fotodiode (13a) ist und
der Schalter ein Thyristor (11) ist.

3. Klimaanlage nach Anspruch 2,
**dadurch gekennzeichnet, dass** der Schalter ein isolierender Schaltkreis ist, der den Thyristor (11) und einen parallel zum Thyristor (11) geschalteten Photothyristor (13b) umfasst geschaltet ist und so konfiguriert ist, dass er als Reaktion auf die Lichtemission der Fotodiode (13a) eingeschaltet wird, und so konfiguriert ist, dass er den Thyristor (11) entsprechend dem Einschalten des Fotothyristors (13b) auslöst.

4. Klimaanlage nach Anspruch 1, **dadurch gekennzeichnet, dass**
das lichtemittierende Element eine Fotodiode (11) ist und
der Schalter eine Reihenschaltung eines Paars von MOSFETs (91, 92) ist, die so konfiguriert sind, dass sie auf die Lichtemission der Fotodiode (11) reagieren.

5. Klimaanlage nach Anspruch 1, **dadurch gekennzeichnet, dass** das erste serielle Signal (D1) mit einer positiven oder negativen Halbwellenspannung der Wechselstromversorgung (1) synchronisiert wird und das zweite serielle Signal (D2) mit einer Halbwellenspannung synchronisiert wird, die sich von der Halbwellenspannung unterscheidet, mit der das erste serielle Signal (D1) synchronisiert wird.

6. Klimaanlage nach Anspruch 1, **dadurch gekennzeichnet, dass** die Außeneinheit (2) ferner Folgendes umfasst:
einen Wechselrichter (8, 31), der so konfiguriert ist, dass er die Spannung des Kondensators (7) in eine Wechselspannung für die Lastansteuerung umwandelt, und
eine Gleichstromversorgung (33), die mit dem Kondensator (7) verbunden ist und so konfiguriert ist, dass sie eine Gleichspannung ausgibt, die für den Betrieb der Außeneinheit (2) einschließlich des Betriebs der Außensteuerung (40) erforderlich ist, wenn die Spannung des Kondensators (7) größer oder gleich einem vorgegebenen Wert ist.

## Revendications

1. Appareil de climatisation comprenant une unité extérieure (2) et une unité intérieure (60), ainsi qu'une ligne de signal (C3) interconnectant l'unité extérieure (2) et l'unité intérieure (60) ;
dans lequel l'unité extérieure (2) inclut :
un convertisseur (6) configuré de manière à convertir une tension d'une alimentation en courant alternatif (1) en une tension continue ;
un condensateur (7) connecté à une extrémité de sortie du convertisseur (6) ;
un élément de prévention de courant d'appel (5) inséré dans une ligne d'alimentation (L1, L2) entre l'alimentation en courant alternatif (1) et le convertisseur (6) ;
un commutateur (11, 13b) configuré de manière à former un circuit série avec l'élément de prévention de courant d'appel (5) en étant inséré dans la ligne d'alimentation (L1, L2) ;
un dispositif de fermeture et de coupure normalement ouvert (41a) connecté en parallèle au circuit série de l'élément de prévention de courant d'appel (5) et du commutateur ; et
un contrôleur extérieur (40) configuré de manière à fermer le dispositif de fermeture et de coupure (41a), et à ouvrir le dispositif de fermeture et de coupure (41a) lorsque le fonctionnement de l'unité extérieure (2) n'est pas nécessaire ;
dans lequel le condensateur (7) est configuré de manière à fournir une tension au contrôleur extérieur (40) ; et
dans lequel l'unité intérieure (60) inclut :
un contrôleur intérieur (70) configuré de manière à transmettre successivement un deuxième signal série (D2) à la ligne de signal (C3) lorsque le fonctionnement de l'unité extérieure (2) est nécessaire ;
dans lequel l'unité extérieure (2) inclut en outre :
un premier circuit de communication série (50) configuré de manière à transmettre un premier signal série (D1) à l'unité intérieure (60) à travers la ligne de signal série, et à recevoir le deuxième signal série (D2) transmis par l'unité intérieure (60) à travers la ligne de signal série ;
dans lequel l'unité intérieure (60) inclut en outre :
un deuxième circuit de communication série (80) configuré de manière à transmettre le deuxième signal série (D2) au premier circuit de communication série (50) à travers la ligne de signal série, et à recevoir le premier signal série (D1) à travers la ligne de signal série, et dans lequel le premier circuit de communication série (50) et le deuxième circuit de communication série (80) sont configurés de manière à synchroniser le premier signal série (D1) et le deuxième signal série (D2), respectivement, avec une tension demi-onde de l'alimentation en courant alternatif (1) ;
**caractérisé en ce que**
le contrôleur extérieur (40) est configuré de manière à fermer le dispositif de fermeture et de coupure (41a) après un temps prédéterminé à partir du début du fonctionnement ;
l'unité extérieure (2) inclut un élément émetteur de lumière (13a) ;
le commutateur (11, 13b) est configuré de manière à répondre à l'émission de lumière de l'élément émetteur de lumière (13a), et dans lequel
l'unité intérieure (60) est en outre configurée de manière à commander l'élément émetteur de lumière (13a) par l'intermédiaire du deuxième signal série (D2).

2. Appareil de climatisation selon la revendication 1, **caractérisé en ce que**
l'élément émetteur de lumière est une photodiode (13a) ; et
le commutateur est un thyristor (11).

3. Appareil de climatisation selon la revendication 2, **caractérisé en ce que** le commutateur est un circuit de commutation isolant qui inclut le thyristor (11), et un photothyristor (13b) connecté en parallèle au thyristor (11) et configuré de manière à être mis sous tension en réponse à l'émission de lumière de la photodiode (13a), et est configuré de manière à déclencher le thyristor (11) conformément à la mise sous tension du photothyristor (13b).

4. Appareil de climatisation selon la revendication 1, **caractérisé en ce que**
l'élément émetteur de lumière est une photodiode (11) ; et
le commutateur est un circuit série d'une paire de transistors à effet de champ à semi-conducteur à oxyde métallique, MOSFET, (91, 92) configuré de manière à répondre à l'émission de lumière de la photodiode (11).

5. Appareil de climatisation selon la revendication 1, **caractérisé en ce que**
le premier signal série (D1) se synchronise avec une tension demi-onde positive ou négative de l'alimentation en courant alternatif (1) ; et
le deuxième signal série (D2) se synchronise avec une tension demi-onde différente de la tension demi-onde avec laquelle le premier signal série (D1) se synchronise.

6. Appareil de climatisation selon la revendication 1, **caractérisé en ce que** l'unité extérieure (2) inclut en outre :
un onduleur (8, 31) configuré de manière à convertir la tension du condensateur (7) en une tension alternative pour une attaque de charge ; et
une alimentation en courant continu (33) qui est connectée au condensateur (7), et qui est configurée de manière à fournir en sortie une tension continue nécessaire au fonctionnement de l'unité extérieure (2), y compris au fonctionnement du contrôleur extérieur (40) lorsque la tension du condensateur (7) est supérieure ou égale à une valeur prédéterminée.
